# EUROPÄISCHE PATENTSCHRIFT

(11) **EP 3 572 699 B1**
(45) Veröffentlichungstag und Bekanntmachung des Hinweises auf die Patenterteilung: **09.03.2022**
(21) Anmeldenummer: 18173936.8
(22) Anmeldetag: 23.05.2018
(51) Int. Cl.: F16L 3/10, F16L 3/123, F16L 3/13, H02G 3/32, B60R 16/02

(54) **VORRICHTUNG MIT EINER BEFESTIGUNGSPLATTE UND EINEM AUFNAHMETEIL ZUR BEFESTIGUNG VON LEITUNGEN, ROHREN, KABELN UND ANDEREN MONTIERBAREN TEILEN**
DEVICE WITH A MOUNTING PLATE AND A RECEIVING PART FOR FIXING LINES, PIPES, CABLES AND OTHER MOUNTABLE PARTS
DISPOSITIF COMPRENANT UNE PLAQUE DE MONTAGE ET UNE PARTIE RÉCEPTRICE POUR LA FIXATION DE LIGNES, TUYAUX, CÂBLES ET AUTRES PIÈCES MONTABLES

(43) Veröffentlichungstag der Anmeldung: 27.11.2019
(73) Patentinhaber: WSF Kunststofftechnik GmbH, 75031 Eppingen-Rohrbach (DE)
(72) Erfinder: Frey, Uwe, 75031 Eppingen-Rohrbach (DE)
(74) Vertreter: Sartorius, Peter

(56) Entgegenhaltungen:
- JP-U- H 051 084
- JP-U- S57 108 380
- US-A- 3 516 631
- US-A1- 2008 125 718
- US-A1- 2017 227 141

## Beschreibung

Die Erfindung betrifft eine Vorrichtung mit einer Befestigungsplatte und einem Aufnahmeteil zur Befestigung von Leitungen, Rohren, Kabeln und anderen montierbaren Teilen an einem feststehenden oder beweglichen Wandteil oder einer Befestigungsfläche mit Hilfe des eine Aufnahmeöffnung aufweisenden Aufnahmeteils und eines gegen das montierbare Teil anlegbaren beweglichen und/oder elastischen oder federnden Klemmelements, wobei:
a) die Bewegungsrichtung der in die Aufnahmeöffnung einführbaren festzuklemmenden Teile, wie Leitungen, Rohre, Kabel und andere montierbare Teile verläuft in etwa quer zur Bewegungsrichtung des schwenkbaren Teils des Aufnahmeteils;
b) eine Einschubrichtung der in die Aufnahmeöffnung einführbaren festzuklemmenden Teile verläuft in etwa quer zur Hauptrichtung der Anpresskraft des Klemmelements;
c) das Aufnahmeteil weist ein Anpresselement auf, das an die Befestigungsplatte beweglich oder je nach Ausführung starr angeschlossen ist;
d) das Anpresselement ist halbkreisförmig und federelastisch ausgebildet, seine Federkraft wirkt in Richtung des festzuklemmenden Teils und sichert dieses in der Aufnahmeöffnung;
e) in einem Innenraum des halbkreisförmigen Anpresselements ist das Klemmelement vorgesehen, das federelastisch ausgebildet ist und gegen eine Leitung, Rohr, Kabel oder ein anderes montierbares Teil angepresst werden kann, sodass das zu montierende Teil gegen die Oberseite der Befestigungsplatte gepresst wird, wobei das Aufnahmeteil an der Befestigungsplatte elastisch hochklappbar ist;
f) das Klemmelement ist als elastisches Rohrteil oder als Lasche ausgebildet und an das Aufnahmeteil oder die Befestigungsplatte beweglich angeschlossen;
g) im Bereich der Aufnahmeöffnung ist an dem Anpresselement ein mit Bezug auf die Befestigungsplatte geneigt verlaufendes bzw. nach oben abgewinkeltes Führungsteil vorgesehen, das beim Einführen des montierbaren Teils soweit weggebogen werden kann, dass das festzuklemmende Teil in die Aufnahmeöffnung zwischen der Befestigungsplatte und dem Führungsteil in einen Innenraum des Aufnahmeteils geschoben und unterhalb des Anpresselements und/oder des Klemmelements positioniert werden kann.

Es ist bereits eine Vorrichtung zum Befestigen eines länglichen Gegenstands, insbesondere eines Kabels, eines Kabelbaums, einer Seilzug- oder Schubstangenführung, einer Bowdenzughülle oder einer Leitung bekannt (DE 103 15 837 B3), die an einer Fläche, insbesondere an einer Rückseite eines Verkleidungsteils befestigt ist, wobei die Fläche einen nach einer Seite hin offenen, den Clip mit dem länglichen Gegenstand aufnehmenden Kanal mit zwei einander gegenüberliegenden Kanalwänden aufweist, wobei ferner der Clip in befestigtem Zustand im Wesentlichen in Längsrichtung des Kanals verlaufende Verzahnungsrippen zur formschlüssigen Verbindung mit den Kanalwänden aufweist und einen länglichen Gegenstand U-förmig so umfasst, dass der längliche Gegenstand an der Befestigungsstelle durch den Clip und den Kanal vollständig umschlossen ist. Ein wesentlicher Nachteil der bekannten Vorrichtung besteht darin, dass der Anpressdruck auf das festzustellende Kabel in Richtung der Einlassöffnung wirkt, sodass keine unterschiedlich große Kabelquerschnitte festgesetzt werden können. Deshalb ist es beim Stand der Technik wichtig, dass der Durchmesser des Kabels in etwa dem Durchmesser des Aufnahmeteils entspricht, in dem das Kabel gesichert werden soll.

Dokument JP S57 108380 U offenbart eine Haltevorrichtung für Kabelbäume. Dokument US 3 516 631 offenbart eine Klemmvorrichtung zur Befestigung eines oder mehrerer Kabel an einer geeigneten Unterstruktur.

Der Erfindung liegt die Aufgabe zugrunde, festzuklemmende Teile, wie Leitungen, Rohre, Kabel und andere zu montierende Teile auf einfache und schnelle Weise dauerhaft und klapperfrei in der Vorrichtung zur Befestigung zu sichern.

Die Aufgabe wird erfindungsgemäß durch Merkmale des Anspruchs 1 gelöst.

Weitere Vorteile und Einzelheiten der Erfindung sind in Patentanspruch 2, in der Beschreibung und in den Figuren dargestellt.

Es zeigen:
- Fig. 1a: eine Seitenansicht der Vorrichtung zur Befestigung von Leitungen, Rohren, Kabeln und anderen zu montierenden Teilen an ein feststehendes oder bewegliches Wandteil oder Befestigungsflächen;
- Fig. 1b: eine perspektivische Ansicht der Vorrichtung, gemäß Fig. 1a;

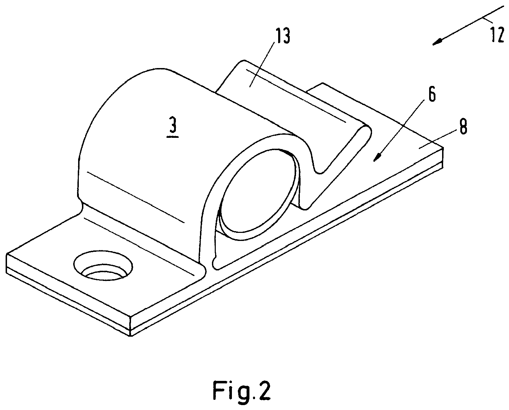

- Fig. 2: ein Ausführungsbeispiel einer nicht erfindungsgemäßen Vorrichtungmit einem Rohrstück als Klemmelement;
- Fig. 3: ein weiteres Ausführungsbeispiel einer nicht erfindungsgemäßen Vorrichtung mit einem Rastelement;
- Fig. 4: eine Prinzipdarstellung eines Teils der Vorrichtung mit dem durch einen Pfeil dargestellten Anpressdruck, der gegen das Klemmelement drückt und dieses gegen ein Wandteil der Befestigungsplatte presst, wobei der zweite waagerecht verlaufende Pfeil die Einschubrichtung des festzuklemmenden Teils andeutet.

In Zeichnung 1 ist eine Vorrichtung 1 zur Befestigung von Leitungen, Rohren, Kabeln und anderen zu montierenden Teilen 2 an ein feststehendes oder bewegliches Wandteil 4 dargestellt. Die Vorrichtung 1 besteht aus einem halbkreisförmigen Aufnahmeteil 3, das seitlich eine Aufnahmeöffnung 6 aufweist. Das Aufnahmeteil 3 weist ferner einen Innenraum 14 auf, in den Anpresselemente 5 oder 7 eingebracht werden.

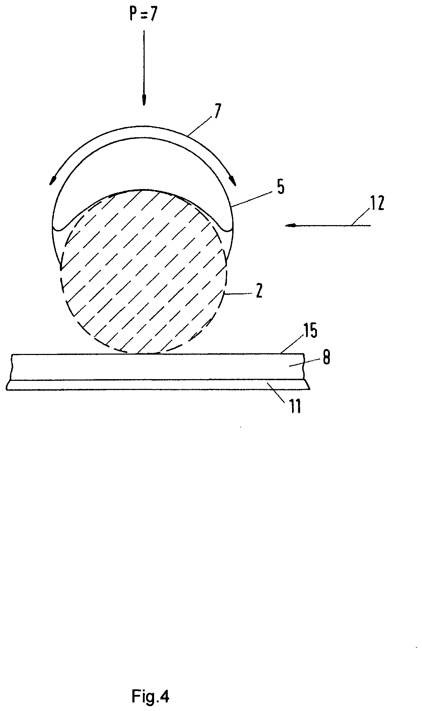

Das innen liegende Wandteil des Aufnahmeteils 3 wird als Anpresselement 7 gemäß Fig. 4 bezeichnet, das aufgrund des zumindest teilweise federelastisch ausgebildeten Aufnahmeteils 3 das Anpresselement 7 in Richtung einer Bodenplatte 8 drückt und dadurch die in den Innenraum eingebrachte Leitung, Rohr, Kabel oder ein anderes zu montierendes Teil 2 gegen die Oberseite einer Bodenplatte 8 presst, an der das Aufnahmeteil 3 elastisch bzw. in einem bestimmten Bereich hochklappbar ist.

Damit das Kabel oder zu montierende Teil 2 erschütterungsfrei bzw. klapperfrei in dem Innenraum 14 gesichert werden kann, ist zwischen dem Anpresselement 7 und dem Teil 2 ein elastisch ausgebildetes Klemmteil 5 vorgesehen, das als hohlförmiges Rohrstück oder als Lasche ausgebildet sein kann und sich aufgrund seiner elastischen Ausbildung gegen die Ober- oder Außenseite des Teils 2 fest anlegt, nachdem das Teil 2 in den Innenraum 14 des Aufnahmeteils 3 eingeschoben worden ist.

Die Einschubrichtung 12 des in die Aufnahmeöffnung 6 des Aufnahmeteils 3 einführbaren und festzuklemmenden Teils oder der Leitungen, Rohre, Kabeln der anderen montierbaren Teile 2 verläuft in etwa quer zur Bewegungsrichtung des schwenkbaren Teils des Aufnahmeteils 3 oder der Anpresskraft des Anpresselements 7 gemäß Pfeil 7 in Fig. 4. Hierdurch wird sichergestellt, dass das Teil 2 stets gegen die Befestigungsplatte 8 oder ein anderes Teil, an das es angeschlossen ist, gedrückt wird und nicht in Richtung der Aufnahmeöffnung, wie das beim Stand der Technik der Fall ist.

Da das Aufnahmeteil 3 und/oder Anpresselement 7 zumindest im Bereich seiner Anschlussstelle an der Befestigungsplatte 8 elastisch ausgebildet ist und dieser Bereich 9 kleiner ist als der sich daran anschließende Teil des Aufnahmeteils, kann beim Einschubvorgang des Teils 2 das Aufnahmeteil 3 kurz nach oben geschwenkt werden, bis das Teil 2 unter dem Klemmelement 5 platziert ist.

Damit der Einschubvorgang des festzuklemmenden Teils 2 erleichtert wird, ist im Bereich der Aufnahmeöffnung 6 an dem Anpresselement 7 ein mit Bezug auf die Befestigungsplatte 8 geneigt verlaufendes bzw. nach oben abgewinkeltes Anlageteil 13 oder Führungsteil vorgesehen, gegen das beim Einführen des montierbaren Teils 2 mit dem sich daran anschließenden Aufnahmeteil 3 soweit nach oben gebogen werden kann, dass das fest zu klemmende Teil in die Aufnahmeöffnung 6, die zwischen einer Befestigungsplatte 8 und einem Führungselement oder Anlageteil 13 vorgesehen ist, eingeschoben und unterhalb des Anpresselements (7) und/oder des Klemmelements (5) positioniert werden kann.

Das Klemmelement 5 bzw. das Rohrelement oder die Lasche umgeben bei angepresster Anlage des Klemmelements 5 gegen das anzupressende Teil 2 dieses zumindest teilweise.

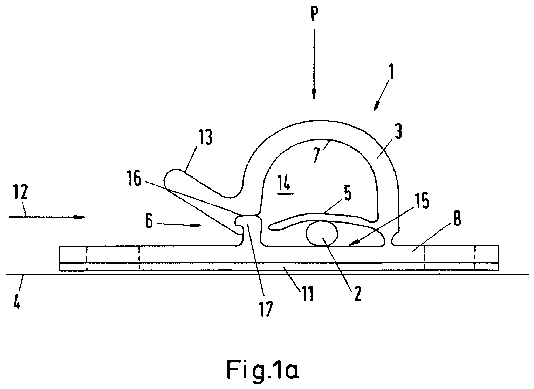

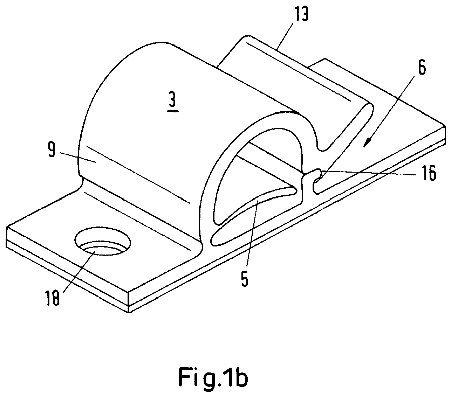

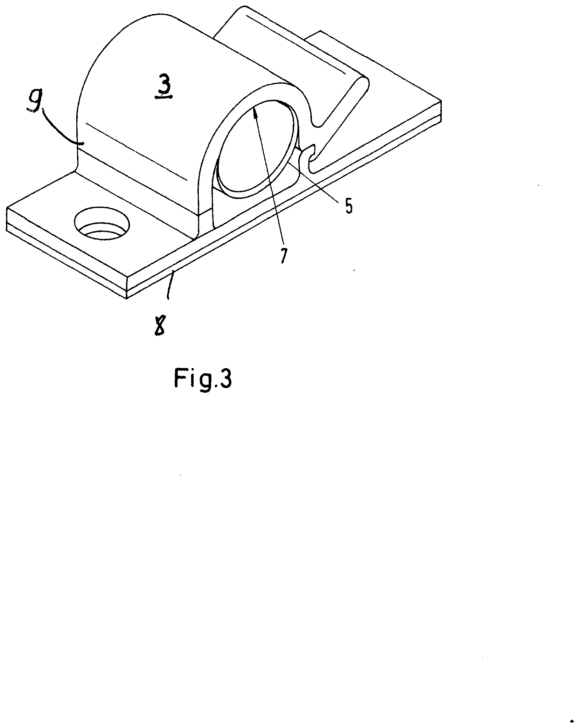

Gemäß Fig. 1a, 1b, 3 ist im Bereich der Aufnahmeöffnung 6 der Vorrichtung 1 zur Befestigung der Leitung oder des Teils im Bereich des einen Endes des Führungselements oder der Lasche 13 ein Rastelement 16 vorgesehen, das mit einem an der Befestigungsplatte 8 vorgesehenen Gegenstück 17 verbunden oder verrastet werden kann.

An der unteren Seite der Bodenplatte 8 ist ein Klebeband oder Klebefilm 11 vorgesehen, das auch als elastischer Untergrund ausgebildet sein kann, damit die Bodenplatte 8 klapperfrei befestigt werden kann. Je nach Ausführung kann die Bodenplatte auch über Schrauben oder Nieten befestigt werden, hierzu weist die Bodenplatte 8 Bohrungen 18 auf.

### Bezugszeichenliste

- 1: Vorrichtung zur Befestigung von Leitungen
- 2: Leitung, Rohr, Kabel, anderes montierbares Teil
- 3: Aufnahmeteil
- 4: Wandteil, Befestigungsfläche
- 5: Klemmelement, Rohrelement, Lasche
- 6: Aufnahmeöffnung
- 7: Anpresselement
- 8: Befestigungsplatte
- 9: Bereich, elastisches Teil
- 11: Klebeband, Klebefilm, elastischer Untergrund
- 12: Einschubrichtung
- 13: Führungselement, Anlageteil, Lasche
- 14: Innenraum
- 15: Wandteil
- 16: Rastelement
- 17: Gegenstück
- 18: Bohrung

- 7: Pfeil = P Anpresskraft

## Patentansprüche

1. Vorrichtung (1) mit einer Befestigungsplatte (8) und einem Aufnahmeteil (3) zur Befestigung von Leitungen, Rohren, Kabeln und anderen montierbaren Teilen (2) an einem feststehenden oder beweglichen Wandteil oder einer Befestigungsfläche (4) mit Hilfe des eine Aufnahmeöffnung (6) aufweisenden Aufnahmeteils (3) und eines gegen das montierbare Teil (2) anlegbaren beweglichen und/oder elastischen oder federnden Klemmelements (5, 7), wobei:
a) die Bewegungsrichtung der in die Aufnahmeöffnung (6) einführbaren festzuklemmenden Teile, wie Leitungen, Rohre, Kabel und andere montierbare Teile (2) verläuft in etwa quer zur Bewegungsrichtung des schwenkbaren Teils des Aufnahmeteils (3);
b) eine Einschubrichtung (12) der in die Aufnahmeöffnung (6) einführbaren festzuklemmenden Teile verläuft in etwa quer zur Hauptrichtung der Anpresskraft (P) des Klemmelements (5);
c) das Aufnahmeteil (3) weist ein Anpresselement (7) auf, das an die Befestigungsplatte (8) beweglich oder je nach Ausführung starr angeschlossen ist:
d) das Anpresselement (7) ist halbkreisförmig und federelastisch ausgebildet, seine Federkraft wirkt in Richtung des festzuklemmenden Teils (2) und sichert dieses in der Aufnahmeöffnung (6);
e) in einem Innenraum (14) des halbkreisförmigen Anpresselements (7) ist das Klemmelement (5) vorgesehen, das federelastisch ausgebildet ist und gegen eine Leitung, Rohr, Kabel oder ein anderes montierbares Teil (2) angepresst werden kann, sodass das zu montierende Teil (2) gegen die Oberseite der Befestigungsplatte (8) gepresst wird, wobei das Aufnahmeteil (3) an der Befestigungsplatte (8) elastisch hochklappbar ist;
f) das Klemmelement (5) ist als elastisches Rohrteil oder als Lasche ausgebildet und an das Aufnahmeteil (3) oder die Befestigungsplatte (8) beweglich angeschlossen;
g) im Bereich der Aufnahmeöffnung (6) ist an dem Anpresselement (7) ein mit Bezug auf die Befestigungsplatte (8) geneigt verlaufendes bzw. nach oben abgewinkeltes Führungsteil (13) vorgesehen, das beim Einführen des montierbaren Teils (2) soweit weggebogen werden kann, dass das festzuklemmende Teil in die Aufnahmeöffnung (6) zwischen der Befestigungsplatte (8) und dem Führungsteil (13) in einen Innenraum (14) des Aufnahmeteils geschoben und unterhalb des Anpresselements (7) und/oder des Klemmelements (5) positioniert werden kann,
**dadurch gekennzeichnet,**
**dass** im Bereich des einen Endes des Führungsteils (13) im Bereich der Aufnahmeöffnung (6) ein Rastelement (16) vorgesehen ist, das mit einem an der Befestigungsplatte (8) vorgesehenen Gegenstück (17) verbunden werden kann.

2. Vorrichtung nach einem der vorhergehenden Ansprüche,
**dadurch gekennzeichnet,**
**dass** das Anpresselement (7) im Bereich seiner Anschlussstelle an die Befestigungsplatte (8) in einem Bereich elastisch ausgebildet ist, der kleiner ist als das sich daran anschließende Aufnahmeteil.

## Claims

1. Device (1) with a fastening plate and a receiving part (3) for fastening lines, pipes, cables and other mountable parts (2) to a fixed or movable wall part or a fastening surface (4) using a Receiving part (3) having a receiving opening (6) and a movable and/or elastic or spring-loaded clamping element (5, 7) which can be placed against the mountable part (2),
wherein the device comprises the following features,
a) the direction of movement of the parts to be clamped, such as lines, pipes, cables and other mountable parts (2) that can be inserted into the receiving opening (6), runs approximately transversely to the direction of movement of the pivotable part of the receiving part (3);
b) an insertion direction (12) of the parts to be clamped, which can be inserted into the receiving opening (6), runs approximately transversely to the main direction of the pressing force (P) of the clamping element (5);
c) the receiving part (3) has a pressing element (7) which is movably or, depending on the design, rigidly connected to a fastening plate (8);
d) the pressing element (7) is semicircular and spring-elastic, its spring force acts in the direction of the part (2) to be clamped and secures it in the receiving opening (6);
e) the clamping element (5) is provided in an inner space of the semicircular pressing element (7), which is designed to be spring-elastic and can be pressed against a line, pipe, cable or other mountable part (2), so that the mounting part (2) is pressed against the upper side of the mounting plate (8), the receiving part (3) being able to be folded up elastically on the mounting plate (8);
f) the clamping element (5) is designed as an elastic tubular part or as a lug and is movably connected to the receiving part (3) or the fastening plate (8);
g) in the area of the receiving opening (6), a guide part (13) is provided on the pressing element (7) that runs inclined or is angled upwards with respect to the fastening plate (8) and that can be bent away when the mountable part (2) is inserted can be that the part to be clamped is pushed into the receiving opening (6) between the fastening plate (8) and the guide part (13) in an interior (14) of the receiving part and below the pressing element (7) and/or the Clamping element (5) can be positioned,
characterized,
. that in the area of one end of the guide part (13) in the area of A receiving opening (6) is provided with a latching element (16) which can be connected to a counterpart (17) provided on the mounting plate (8).

2. Device according to one of the preceding claims,
characterized,
that the pressing element (7) in the region of its connection point to the Mounting plate (8) is designed to be elastic in an area that is smaller than the adjoining receiving part.

## Revendications

1. Dispositif (1) avec une plaque de fixation et une partie réceptrice (3) pour fixer des lignes, des tuyaux, des câbles et d'autres pièces montables (2) à une partie de mur fixe ou mobile ou une surface de fixation (4) à l'aide d'une partie réceptrice ( 3) comportant une ouverture de réception (6) et un élément de serrage mobile et/ou élastique ou à ressort (5, 7) qui peut être placé contre la partie de montage (2),
dans lequel le dispositif comprend les caractéristiques suivantes,
a) la direction de mouvement des pièces à serrer, telles que des conduites, des tuyaux, des câbles et d'autres pièces à monter (2) pouvant être insérées dans l'ouverture de réception (6), s'étend approximativement transversalement à la direction de mouvement de l'élément pivotant une partie de la partie réceptrice (3);
b) une direction d'insertion (12) des pièces à serrer, qui peut être insérée dans l'ouverture de réception (6), s'étend approximativement transversalement à la direction principale de la force de pression (P) de l'élément de serrage (5) ;
c) la partie réceptrice (3) présente un élément de pression (7) qui est relié de manière mobile ou, selon la conception, de manière rigide à une plaque de fixation (8);
d) l'élément de pression (7) est semi-circulaire et élastique, sa force élastique agit en direction de la pièce (2) à serrer et la fixe dans l'ouverture de réception (6);
e) l'élément de serrage (5) est prévu dans un espace intérieur de l'élément de pression semi-circulaire (7), qui est conçu pour être élastique et peut être pressé contre une conduite, un tuyau, un câble ou une autre pièce de montage (2), de sorte que la pièce de montage (2) est plaquée contre la face supérieure de la plaque de montage (8), la pièce de réception (3) pouvant être repliée élastiquement sur la plaque de montage (8) ;
f) l'élément de serrage (5) est conçu comme une partie tubulaire élastique ou comme une patte et est relié de manière mobile à la partie de réception (3) ou à la plaque de fixation (8) ;
g) dans la zone de l'ouverture de réception (6), une partie de guidage (13) est prévue sur l'élément de pression (7) qui s'étend incliné ou est incliné vers le haut par rapport à la plaque de fixation (8) et qui peut être pliée lorsque la pièce de montage (2) est insérée, la pièce à serrer peut être poussée dans l'ouverture de réception (6) entre la plaque de fixation (8) et la pièce de guidage (13) dans un espace intérieur (14) du la partie réceptrice et sous l'élément de pression (7) et/ou l'élément de serrage (5) peuvent être positionnés,
caractérisé,
que dans la zone d'une extrémité de la partie de guidage (13) dans la zone de Une ouverture de réception (6) est pourvue d'un élément de verrouillage (16) qui peut être relié à une contrepartie (17) prévue sur la plaque de montage (8).

2. Dispositif selon l'une des revendications précédentes,
caractérisé,
que l'élément de pression (7) dans la région de son point de raccordement au La plaque de montage (8) est conçue pour être élastique dans une zone qui est plus petite que la partie réceptrice attenante.
